# EUROPEAN PATENT SPECIFICATION

(11) **EP 2 164 270 B1**
(45) Date of publication and mention of the grant of the patent: **12.10.2016**
(21) Application number: 08700663.1
(22) Date of filing: 16.01.2008
(51) Int. Cl.: H04W 72/04

(54) **METHOD FOR CONFIGURING TRANSMISSION BEARER UNDER COMMON STATUS**
VERFAHREN ZUM KONFIGURIEREN EINES ÜBERTRAGUNGSTRÄGERS UNTER GEMEINSAMEM STATUS
PROCÉDÉ SERVANT À CONFIGURER UN SUPPORT DE TRANSMISSION SOUS UN ÉTAT COMMUN

(30) Priority: 20.06.2007 CN 200710111465
(43) Date of publication of application: 17.03.2010
(73) Proprietor: ZTE Corporation, Shenzhen, Guangdong 518057 (CN)
(72) Inventor: KE, Yazhu, Guangdong 518057 (CN); CHENG, Xiang, Guangdong 518057 (CN)
(74) Representative: Studio Torta S.p.A.
(86) International application number: PCT/CN2008/000113
(87) International publication number: WO 2008/154788

(56) References cited:
- WO-A1-03/044999
- CN-A- 1 722 872
- KR-A- 20050 064 906
- "Technical Specification Group Radio Access Network; UTRAN Iub interface Node B Application Part (NBAP) signalling (Release 7)", 3GPP STANDARD; 3GPP TS 25.433, no. V7.5.0, 1 June 2007 (2007-06-01), XP002711750,

## Description

### Field of the Invention

The present invention relates to communication field, in particular to a method for configuring transmission bearer under common status.

### Background of the Invention

In order to improve the large data flow rate of a user and the throughput capacity of a system, a high speed downlink shared channel (HS-DSCH) is introduced into the R5 standard protocol of a third generation partner plan (3GPP). The physical channel mapped by the high speed downlink shared channel adopts time division and code division modes. The high speed downlink shared channel adopts hybrid auto repeat request (HARQ) technology and automatic modulation coding (AMC) technology, ensuring that the peak rate can reach 10.8 Mbps-30Mbps. The ultimate aim thereof is to increase the capacity of the system and decrease the transmission delay by providing the access of high speed packet service, so that the needs of the user to the service quality (Qos) can be met.

At present, the 3GPP protocol standard strengthens the forward access status (CELL_FACH) under a radio resource control (RRC) connection mode and the paging status (CELL_PCH/URA_PCH) under the radio resource control connection mode. That is to say, the high speed shared channel can also be used under the CELL_FACH status and/or CELL_PCH/URA_PCH status (the technology of using the high speed shared packet access (HSDPA) under the CELL_FACH status and/or CELL_PCH/URA_PCH status is called strengthened connection mode common status for short herein).

Meanwhile, the transmission bearer is a necessary channel for transmitting data between a radio network controller and a base station. Therefore, as for the common status channel, a transmission bearer channel needs to be established through a common process, for the transmission channel between the radio network controller and the base station or for the media access control flow. And then the base station can identify which transmission channel or which media access flow the data comes from according to a transmission bearer identifier.

At present, with the protocol, the transmission bearer identifier used under the strengthened connection mode common status is made to be associated with the media access control flow. However, the protocol does not provide a corresponding media access control flow for the common control channel (CCCH) and signal radio bearer 1 (SRB1) under the strengthened connection mode common status. Furthermore, according to the common flow, it does not specially configure transmission bearer for CCCH and SRB1 either.

In this case, if the CCCH and SRB 1 can use the transmission bearer associated with any one configured media access flow, and if the priority queues corresponding to the CCCH and SRB1 are not included in the priority queues corresponding to the media access control (MAC) flow, the behavior of the base station is indiscriminative. The solution aiming at solving the problem has not been proposed by now.

Patent document WO 03/044999 discloses a method for multiplexing data streams onto a transponder bearer between an originating network node and a receiving network node.

Document 3GPP TS 25.433, No. V 7.5.0, 1 June 2007 (2007-06-01), pages 1-939, XP002711750 discloses a radio network layer signaling protocol to be used for Control Plane over Iub Interface.

### Summary of the Present Invention

With the above mentioned problem into consideration, the present invention mainly aims to provide a method for configuring transmission bearer under common status.

According to the embodiments of the present invention, a method for configuring transmission bearer under common status is provided.

The method comprises: the radio network controller informs via a signaling the base station the transmission bearer identifier corresponding to the CCCH and SRB1 of the cell governed by the base station; the base station obtains the transmission bearer identifier from the signaling, and returns the transmission bearer identifier in a response message.

Meanwhile, the CCCH and SRB 1 can correspond to a same transmission bearer identifier, and can also respectively correspond to different transmission bearer identifiers.

The above mentioned signaling can be the application part signaling of node B.

The above mentioned signaling can be physical shared channel reconfiguration request message. In this case, the response message is the physical shared channel reconfiguration response message triggered by the physical shared channel reconfiguration request message.

The above mentioned transmission bearer identifier can comprise binding identification number and transmission layer address.

In addition, the radio network controller can inform the service quality requirement corresponding to the transmission bearer via the signaling.

In addition, the base station returns in the response message the initial flow distribution information associated with the transmission bearer identifier. And the radio network controller then sends the CCCH and SRB1 data according to the initial flow distribution information.

The present invention can guarantee that the radio network controller and the base station have consistent cognition about the sending and receiving channels through the above mentioned technical solution, so that user equipment can receive the data on the CCCH and SRB1 correctly.

### Brief Description of the Drawings

The drawings in the specification provide a further understanding of the present invention and constitute a part of the application. The exemplary embodiments of the present invention and the explanation thereof are given thereafter by way of illustration only, and thus are not limitative of the present invention, in which:
Fig. 1 is a flow chart of the method for configuring transmission bearer under common status according to the embodiment of the present invention;
Fig.2 is a signaling flow chart of example 1 during implementing the method for configuring transmission bearer under common status according to the embodiment of the present invention;
Fig.3 is a signaling flow chart of example 2 during implementing the method for configuring transmission bearer under common status according to the embodiment of the present invention;
Fig.4 is a signaling flow chart of example 3 during implementing the method for configuring transmission bearer under common status according to the embodiment of the present invention; and
Fig.5 is a signaling flow chart of example 4 during implementing the method for configuring transmission bearer under common status according to the embodiment of the present invention.

### Detailed Description

The embodiments of the present invention will be detailed hereinafter and reference will be made to the drawings, wherein the embodiments described here are only used for explaining the present invention, but are not used to restrict the present invention in any sense.

A method for configuring transmission bearer under common status is provided in the embodiment.

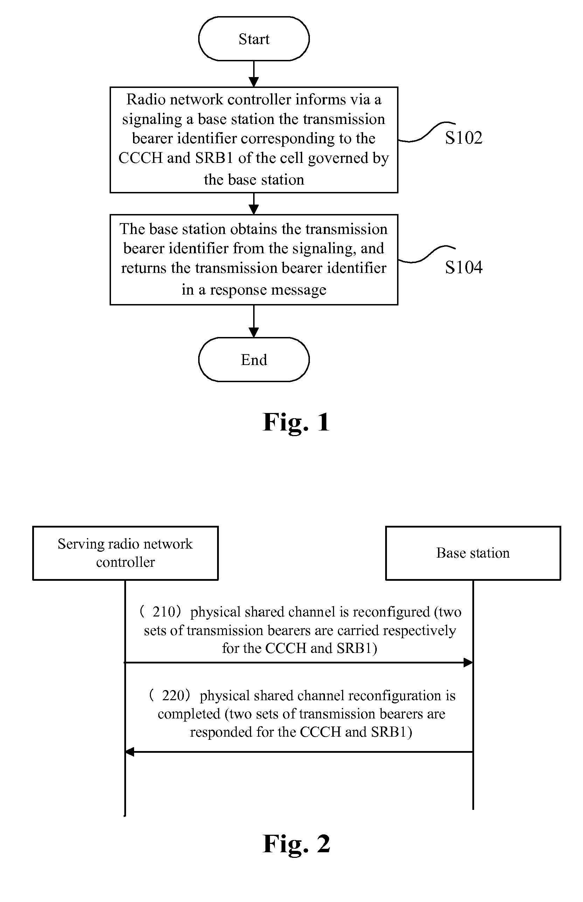

As shown in Fig. 1, the method for configuring transmission bearer under common status according to the present embodiment comprises: Step S102, the radio network controller informs via a signaling the base station the transmission bearer identifier corresponding to the CCCH and SRB1 of the cell governed by the base station; and Step S104, the base station obtains the transmission bearer identifier from the signaling, and returns the transmission bearer identifier in a response message.

Meanwhile, the CCCH and SRB1 can correspond to a same transmission bearer identifier (configuring one set of transmission bearer), or respectively correspond to different transmission bearer identifiers (configuring two sets of transmission bearers).

The above mentioned signaling can be the application part (NBAP) signaling of node B.

For example, the above mentioned signaling is the physical shared channel reconfiguration request message. In this case, the response message is the physical shared channel reconfiguration response message triggered by the physical shared channel reconfiguration request message.

The above mentioned transmission bearer identifier can comprise binding identification number and transmission layer address.

In addition, the radio network controller can inform via the signaling the service quality requirement (Qos) corresponding to the transmission bearer.

In addition, the base station returns in the response message the initial flow distribution information associated with the transmission bearer identifier. Herein the radio network controller sends the CCCH and SRB1 data according to the initial flow distribution information.

The processing executed under various situations mentioned above will be detailed hereafter with reference to the detailed embodiments:

### example 1: the method of configuring two sets of transmission bearers respectively for the CCCH and SRB 1.

As shown in Fig.2, the example includes the processing steps as follows:
Step 210, the radio network controller sends to the base station the physical shared channel reconfiguration request message which carries the binding identification number and the transmission layer address corresponding to the CCCH and the service quality requirement that the transmission layer needs to meet as well as the binding identification number and the transmission layer address corresponding to the SRB1 and the service quality requirement that the transmission layer (namely the transmission bearer) needs to meet;
Step 220, the base station returns the physical shared channel reconfiguration response message to the radio network controller, wherein, the physical shared channel reconfiguration response message carries the binding identification number and the transmission layer address corresponding to the CCCH, and the binding identification number and the transmission layer address corresponding to the SRB 1.

### Example 2: the method of configuring one set of shared transmission bearer for the CCCH and SRB 1.

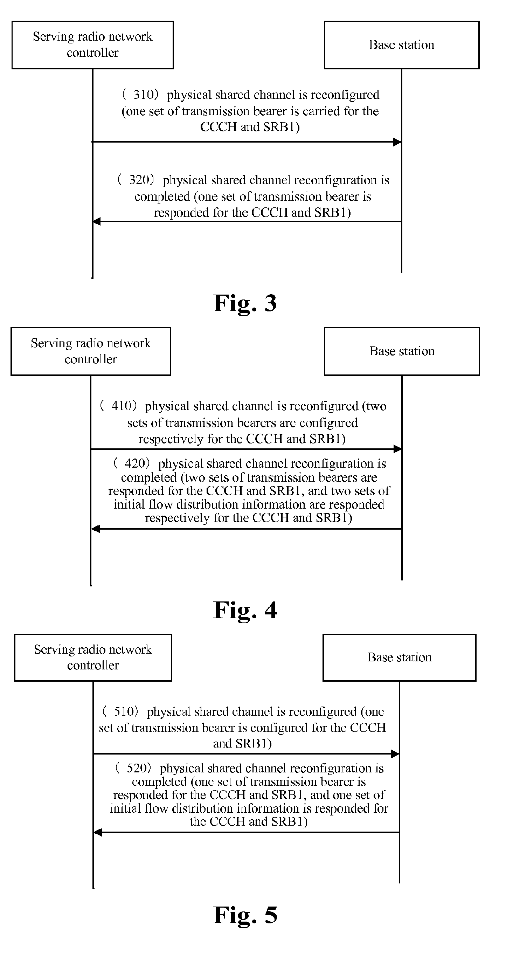

As shown in Fig.3, the embodiment includes the processing steps as follows:
Step 310, the radio network controller sends to the base station the physical shared channel reconfiguration request message which carries the binding identification number and the transmission layer address corresponding to the CCCH and SRB1 and the service quality requirements that the transmission layer needs to meet;
Step 320, the base station returns to the radio network controller the physical shared channel reconfiguration response message which carries the binding identification number and the transmission layer address corresponding to the CCCH and SRB1.

### example 3: the method of configuring two sets of transmission bearers for the CCCH and SRB 1 wherein the initial flow distribution information is carried in the response message.

As shown in Fig.4, it includes the processing steps as follows:
Step 410, the radio network controller sends to the base station the physical shared channel reconfiguration request message which carries the binding identification number and the transmission layer address corresponding to the CCCH and the service quality requirement that the transmission layer needs to meet as well as the binding identification number and the transmission layer address corresponding to the SRB1 and the service quality requirement that the transmission layer needs to meet;
Step 420, the base station returns to the radio network controller the physical shared channel reconfiguration response message which carries the binding identification number and the transmission layer address corresponding to the CCCH and the initial flow distribution information corresponding to the transmission bearer of the CCCH, as well as the binding identification number and the transmission layer address corresponding to the SRB 1 and the initial flow distribution information corresponding to the transmission bearer (namely, corresponding to the transmission bearer identifier) of the SRB 1.

### example 4: the method of configuring one set of shared transmission bearer for the CCCH and SRB1 in which the initial flow distribution information is carried in the response message.

As shown in Fig.5, it includes the processing steps as follows:
Step 510, the radio network controller sends to the base station the physical shared channel reconfiguration request message which carries the binding identification number and the transmission layer address corresponding to the CCCH and SRB1 and the service quality requirements that the transmission layer needs to meet;
Step 520, the base station returns to the radio network controller the physical shared channel reconfiguration response message which carries the binding identification number and the transmission layer address corresponding to the CCCH and SRB1, and the initial flow distribution information corresponding to the transmission bearers of the CCCH and SRB1.

To sum up, the present invention provides a method for configuring special transmission bearer for the CCCH and SRB1, which can guarantee that the radio network controller and the base station have consistent cognition about the sending and receiving channels, so as to assure that the user equipment can receive the data on the CCCH and SRB1 correctly.

## Claims

1. A method for configuring transmission bearer under a common status which refers to the use of high speed shared packet access, HSDPA, under forward access state, CELL_FACH, and/or under cell paging state, CELL_PCH, or URA paging state, URA PCH, comprising the steps of:
the radio network controller informs (S102) via a signaling a base station one or two transmission bearer identifiers for the CCCH and SRB1 of the cell governed by the base station; and
the base station obtains (S104) the one or two transmission bearer identifiers from the signaling, and returns the one or two transmission bearer identifiers in a response message
**characterized in that** the base station returns (420) in the response message initial flow distribution information associated with the one or two transmission bearer identifiers.

2. The method for configuring transmission bearer under common status according to Claim 1, **characterized in that** the CCCH and SRB1 correspond to a same transmission bearer identifier, or respectively correspond to different transmission bearer identifiers.

3. The method for configuring transmission bearer under common status according to Claim 1, **characterized in that** the signaling is the application part signaling of node B.

4. The method for configuring transmission bearer under common status according to Claim 1, **characterized in that** the signaling is a physical shared channel reconfiguration request message (210).

5. The method for configuring transmission bearer under common status according to Claim 4, **characterized in that** the response message is a physical shared channel reconfiguration response message triggered by the physical shared channel reconfiguration request message (220).

6. The method for configuring transmission bearer under common status according to Claim 1, **characterized in that** the one or two transmission bearer identifiers comprises (210) binding identification number and transmission layer address.

7. The method for configuring transmission bearer under common status according to Claim 1, **characterized in that** the radio network controller also informs (S102) via the signaling the service quality requirement corresponding to the transmission bearer.

8. The method for configuring transmission bearer under common status according to Claim 1, **characterized in that** the radio network controller sends (410) CCCH and SRB1 data according to the initial flow distribution information.

## Patentansprüche

1. Verfahren zum Konfigurieren eines Übertragungsträgers bzw. Transmission Bearer unter einem gemeinsamen Status, der sich auf die Nutzung von High Speed Shared Packet Access, HSDPA, unter Forward-Access-State, CELL_FACH, und/oder unter Cell-Paging-State, CELL_PCH, oder URA-Paging-State, URA_PCH bezieht, umfassend die Schritte:
der Radio Network Controller informiert (S102) über ein Signalisieren einer Basisstation über einen oder zwei Übertragungsträger- bzw. Transmission-Bearer-Identifikatoren für CCCH und SRB1 der Zelle, die durch die Basisstation gesteuert wird bzw. dieser unterliegt; und
die Basisstation empfängt (S104) den einen oder die zwei Übertragungsträger- bzw. Transmission-Bearer-Identifikatoren von dem Signalisieren und sendet den einen oder die zwei Übertragungsträger- bzw. Transmission-Bearer-Identifikatoren in einer Antwortnachricht zurück,
**dadurch gekennzeichnet, dass** die Basisstation in der Antwortnachricht die ursprüngliche Strömungsverteilungs-Information(en) bzw. Flow-Distribution-Information(en) zugehörig zu dem einen oder den zwei Übertragungsträger- bzw. Transmission-Bearer-Identifikatoren zurücksendet (420).

2. Verfahren zum Konfigurieren eines Übertragungsträgers bzw. Transmission Bearer unter einem gemeinsamen Status nach Anspruch 1, **dadurch gekennzeichnet, dass** CCCH und SRB1 einem selben Übertragungsträger- bzw. Transmission-Bearer-Identifikator entsprechen bzw. verschiedenen Übertragungsträger- bzw. Transmission-Bearer-Identifikatoren entsprechen.

3. Verfahren zum Konfigurieren eines Übertragungsträgers bzw. Transmission Bearer unter einem gemeinsamen Status nach Anspruch 1, **dadurch gekennzeichnet, dass** das Signalisieren das Anwendungsteilsignalisieren vom Knoten B bzw. Node B ist.

4. Verfahren zum Konfigurieren eines Übertragungsträgers bzw. Transmission Bearer unter einem gemeinsamen Status nach Anspruch 1, **dadurch gekennzeichnet, dass** das Signalisieren eine Physical Shared Channel Reconfiguration Request-Nachricht ist (210).

5. Verfahren zum Konfigurieren eines Übertragungsträgers bzw. Transmission Bearer unter einem gemeinsamen Status nach Anspruch 4, **dadurch gekennzeichnet, dass** die Antwortnachricht eine Physical Shared Channel Reconfiguration Response-Nachricht ist, die durch die Physical Shared Channel Reconfiguration Request-Nachricht ausgelöst wurde (220).

6. Verfahren zum Konfigurieren eines Übertragungsträgers bzw. Transmission Bearer unter einem gemeinsamen Status nach Anspruch 1, **dadurch gekennzeichnet, dass** der eine oder die zwei Übertragungsträger- bzw. Transmission-Bearer-Identifikatoren Binding Identifikationsnummer und Übertragungslayeradresse umfassen (210).

7. Verfahren zum Konfigurieren eines Übertragungsträgers bzw. Transmission Bearer unter einem gemeinsamen Status nach Anspruch 1, **dadurch gekennzeichnet, dass** der Radio Network Controller auch über das Signalisieren über die Servicequalitätsanforderungen, die dem Übertragungsträger bzw. Transmission Bearer entsprechen, informiert (S102).

8. Verfahren zum Konfigurieren eines Übertragungsträgers bzw. Transmission Bearer unter einem gemeinsamen Status nach Anspruch 1, **dadurch gekennzeichnet, dass** der Radio Network Controller CCCH und SRB1-Daten gemäß der ursprünglichen Strömungsverteilungs-Information(en) bzw. Flow-Distribution-Information(en) sendet (410).

## Revendications

1. Procédé pour configurer un support de transmission sous un statut commun qui se rapporte à l'utilisation d'accès de paquet partagé haute vitesse, HSDPA, sous état d'accès aller, CELL_FACH, et/ou sous état de radiomessagerie de cellule, CELL_PCH, ou état de radiomessagerie URA, URA_PCH, comprenant les étapes de :
le contrôleur de réseau radio informe (S102) via une signalisation une station de base d'un ou deux identificateurs de support de transmission pour le CCCH et le SRB1 de la cellule gouvernée par la station de base ; et
la station de base obtient (S104) les un ou deux identificateurs de support de transmission à partir de la signalisation, et retourne les un ou deux identificateurs de support de transmission dans un message de réponse
**caractérisé en ce que** la station de base retourne (420) dans le message de réponse des informations de distribution de flux initiale associées aux un ou deux identificateurs de support de transmission.

2. Procédé pour configurer un support de transmission sous statut commun selon la revendication 1, **caractérisé en ce que** le CCCH et le SRB1 correspondent à un même identificateur de support de transmission, ou correspondent respectivement à des identificateurs de support de transmission différents.

3. Procédé pour configurer un support de transmission sous statut commun selon la revendication 1, **caractérisé en ce que** la signalisation est la signalisation de partie d'application de noeud B.

4. Procédé pour configurer un support de transmission sous statut commun selon la revendication 1, **caractérisé en ce que** la signalisation est un message de demande de reconfiguration de canal partagé physique (210).

5. Procédé pour configurer un support de transmission sous statut commun selon la revendication 4, **caractérisé en ce que** le message de réponse est un message de réponse de reconfiguration de canal partagé physique déclenché par le message de demande de reconfiguration de canal partagé physique (220).

6. Procédé pour configurer un support de transmission sous statut commun selon la revendication 1, **caractérisé en ce que** les un ou deux identificateurs de support de transmission comprennent (210) un numéro d'identification de liaison et une adresse de couche de transmission.

7. Procédé pour configurer un support de transmission sous statut commun selon la revendication 1, **caractérisé en ce que** le contrôleur de réseau radio informe également (S102) via la signalisation de l'exigence de qualité de service correspondant au support de transmission.

8. Procédé pour configurer un support de transmission sous statut commun selon la revendication 1, **caractérisé en ce que** le contrôleur de réseau radio envoie (410) des données CCCH et SRB1 selon les informations de distribution de flux initiale.
